# EUROPÄISCHE PATENTSCHRIFT

(11) **EP 0 387 263 B1**
(45) Veröffentlichungstag und Bekanntmachung des Hinweises auf die Patenterteilung: **02.03.1994**
(21) Anmeldenummer: 88909266.4
(22) Anmeldetag: 03.11.1988
(51) Int. Cl.: B04B 1/02, A61C 17/06, A61C 17/14

(54) **ZENTRIFUGALABSCHEIDER**
CENTRIFUGAL SEPARATOR
SEPARATEUR CENTRIFUGE

(30) Priorität: 03.11.1987 AT 2887/87
(43) Veröffentlichungstag der Anmeldung: 19.09.1990
(73) Patentinhaber: Trawöger, Werner, 6020 Innsbruck (AT); PREGENZER, Bruno, 6173 Oberperfuss (AT)
(72) Erfinder: Trawöger, Werner, 6020 Innsbruck (AT); PREGENZER, Bruno, 6173 Oberperfuss (AT)
(74) Vertreter: Torggler, Paul, Dr.
(86) Internationale Anmeldenummer: AT8800085
(87) Internationale Veröffentlichungsnummer: WO8904214

(56) Entgegenhaltungen:
- FR-A- 835 068
- FR-A- 2 463 748

## Beschreibung

Die Erfindung betrifft einen Zentrifugalabscheider zur Trennung eines Feststoff-Flüssigkeitsgemisches aus dentalem Abwasser, mit einer Vollmantelzentrifuge, die einen angetriebenen Mittelteil, einen oberen Gemischeinlaß, einen oberen Flüssigkeitsauslaß, einen unteren Feststoffauslaß und eine Zentrifugenkammer aufweist, die mit einem eine Abscheidefläche umfassenden Mantel versehen ist, wobei der Mantel am Mittelteil an Durchtrittsöffnungen zum Feststoffauslaß freilassenden Verbindungsstegen gehalten ist, sich von den Verbindungsstegen konisch nach oben erweitert, und an einem oberen nach innen gerichteten Sperrflansch in einer Flüssigkeitsübertrittskante endet.

Ein derartiger Abscheider ist beispielsweise aus der FR-A 2,463,748 bereits bekannt. Dort wird das Gemisch möglichst tief ins Zentrifugeninnere zugeführt und über einen feststehenden Verteilerring an den Mantel geführt. Die weitgehend feststofffreie Flüssigkeit fließt über eine an einem nach innene weisenden Sperrflansch ausgebildete, obere Mantelkante in eine Ringkammer und von dort zu einem Auslauf, während sich die Feststoffe am Mantel absetzen. Der Mantel wird an einer Nabe mittels einer durchbrochenen Hülse gehalten, sodaß Feststoffauslaßöffnungen freibleiben, durch die bei Stillstand der Zentrifuge die Feststoffe mit etwas Restflüssigkeit durch Schwerkraft in einen darunterliegenden Auffangbehälter abfließen. Die über den an der oberen Mantelkante vorgesehenen Sperrflansch strömende Flüssigkeit nimmt einen Teil der Feststoffe mit, und es wird ein Abscheidegrad zwischen 85 % bis 95 % erzielt.

Aus der FR-A 835 068 ist eine Zentrifuge zum Reinigen von Holz- bzw. Papierbrei und Zellulose bekannt, die zwei ineinander angeordnete Zentrifugenkammern aufweist. Beide enthalten Filtermatten, auf denen die Feststoffe ablagern und von der durch die Filtermatten nach oben strömenden Flüssigkeit gereinigt werden. Der Ringraum zwischen den beiden Mänteln wird nach oben breiter, entweder durch abgesetzte zylindrische Mantelabschnitte oder dadurch, daß der innere Mantel sich konisch verjüngt und der äußere Mantel konisch erweitert. Dadurch ist es möglich, die gereinigten, für eine weitere Verwendung benötigten Feststoffe zusammen mit den Filtermatten nach oben aus den Zentrifugenkammern zu entnehmen, sobald der Deckel geöffnet wird.

Die Erfindung hat es sich nun zur Aufgabe gestellt, einen Zentrifugalabscheider der eingangs genannten Art mit verbesserter Trennwirkung in einfachster Bauart zu schaffen.

Erfindungsgemäß wird dies dadurch erreicht, daß zwei Zentrifugenkammern ineinander angeordnet sind, wobei der inneren Zentrifugenkammer der Gemischeinlaß und der äußeren die beiden Auslässe zugeordnet sind, und daß die innere Zentrifugenkammer mit einem eine erste Abscheidefläche umfassenden Mantel versehen ist, der am angetriebenen Mittelteil an Durchtrittsöffnungen in die äußere Zentrifugenkammer freilassenden Verbindungsstegen gehalten ist, sich von den Verbindungsstegen ebenfalls konisch nach oben erweitert, und in einem nach innen gerichteten oberen Sperrflansch endet, wobei durch die Durchtrittsöffnungen während der Rotation die Flüssigkeit und ein Restanteil von Feststoffen in die äußere Zentrifugenkammer übertreten und nach Stillstand die an beiden Ahscheideflächen gesammelten Feststoffe gemeinsam mit einem Restanteil von Flüssigkeit unter Schwerkrafteinfluß zum Feststoffauslaß abfließen. Die Ausbildung zweier Überlaufkanten hebt den Abscheidegrad drastisch an, da in der zweiten Kammer, die denselben Abscheidegrad wie die erste aufweist, wiederum etwa 85% bis 95% des aus der ersten Kammer mitgerissenen Restes von 5% bis 15 % der von Feststoffe abgeschieden werden. Der mit zwei Kammern erzielbare Abscheidegrad beläuft sich somit auf 95,75 bis 99,75 %.

Die Zentrifugenkammern könnten durch eigene, aneinandergereihte Zentrifugenbehälter gebildet sein. Vorteilhaft sind jedoch nur die Mäntel der Zentrifugenkammern an einem gemeinsamen Mittelteil gehalten. Die ineinanderliegenden Zentrifugenkammern ermöglichen nicht nur die Zuführung des Gemisches, sondern auch die Abführung der gereinigten Flüssigkeit jeweils an der Oberseite, da der innere Mantel auch eine Trennung von Ein- und Auslaß bildet.

In dieser vorteilhaften Ausführung ist es weiters günstig, wenn die Durchtrittsöffnungen zwischen den Verbindungsstegen der inneren Zentrifugenkammer schräg nach unten außen verlaufen. Dadurch wird eine Beschleunigung des über die untere Überlaufkante des ersten Mantels austretenden Materials erzielt, die die Abscheidung der mitgeführten, vor allem sehr feinen Partikel an der Innenseite des zweiten Mantels verbessert. Die Durchtrittsöffnungen können dabei auch gekrümmt ausgebildet sein. Ist der Mittelteil mit einer nach unten ragenden Hülse verbunden, und bilden Wandteile der Hülse die Verbindungsstege des äußeren Mantels, so ist vorzugsweise vorgesehen, daß die Hülse einen vergrößerten Durchmesser aufweist, und daß die Verbindungsstege des inneren Mantels sich nach unten zum Verbindungsbereich der Külse mit dem Mittelteil erstrecken. Die Verbindungsstege verlaufen somit parallel zur Drehachse in einer Zylindermantelfläche und behindern damit weder die innere Abscheidung der Feststoffe noch deren Austragung bei Stillstand der Zentrifuge. Die Verbindungsstege des äußeren Mantels lassen den Feststoffauslaß bildende Durchtrittsöffnungen in den nach unten offenen Innenraum der Hülse frei, der einen ersten Teil eines darunterliegenden Auffangraumes bildet. Da die Durchtrittsöffnungen zwischen der inneren und der äußeren Zentrifugenkammer von denen in den Innenraum des hülsenförmigen Fortsatzes axial nur wenig beabstandet sind, sind die Verbindungsstege der inneren Zentrifugenkammer zu denen der äußeren Zentrifugenkammer in Umfangsrichtung versetzt.

In einer weiteren bevorzugten Ausführung ist vorgesehen, daß die Erzeugenden der beiden Mäntel aus im Winkel aneinanderstoßenden, geraden Abschnitten bestehen und die oberen Endabschnitte beider Erzeugenden sich annähernd in derselben Radialebene senkrecht zur Rotationsachse erstrecken. Beispielsweise schließt an den oberen Endabschnitt der Erzeugenden des inneren Mantels, der sich senkrecht zur Rotationsachse erstreckt, ein mittlerer, gerader Abschnitt in einem Winkel von 150° an. Von diesem in einem rechten Winkel ausgehend nähert sich der untere Endabschnitt in einem Winkel von 30° wieder der Rotationsachse, wobei dieser von der Rotationsachse weiter entfernt endet als der obere Endabschnitt. Wie erwähnt, verbinden den unteren Endabschnitt die parallel zur Rotationsachse ausgerichteten Verbindungsstege mit dem einen größeren Durchmesser aufweisenden Fortsatz des Mittelteiles. Die Erzeugenden des äußeren Mantels weisen einen ersten, einen Sperrflansch bildenden Abschnitt senkrecht zur Rotationsachse auf, an den sich weitere Abschnitte beispielsweise in Winkeln von 80° und 145° anschließen, sodaß der untere Endabschnitt im Winkel von 45° zur Rotationsachse liegt. Von diesem erstrecken sich die Verbindungsstege parallel nach oben zum Fortsatz des Mittelteiles. In der praktischen Erprobung konnte mit einem derart bemessenen Zentrifugenbehälter mit ineinanderliegenden Mänteln eine Abscheiderate von mehr als 99,9 % erzielt werden.

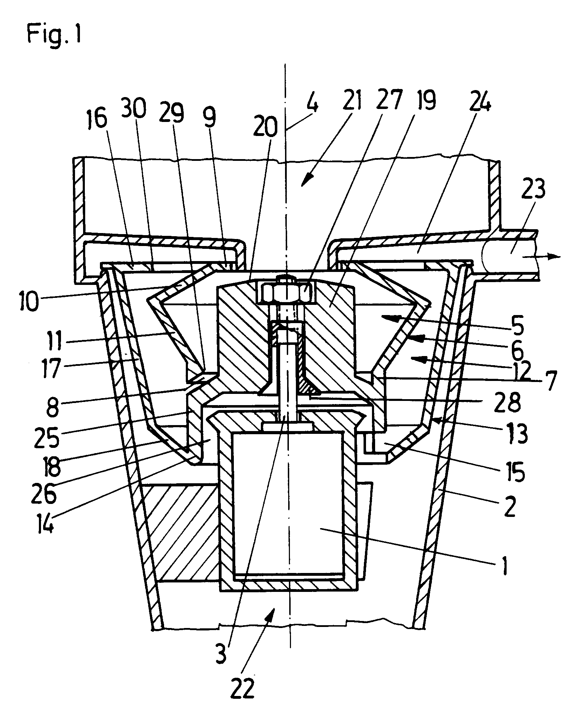

Nachstehend wird nun die Erfindung anhand der Figur der beiliegenden Zeichnung näher beschrieben, ohne darauf beschränkt zu sein. Diese zeigt einen Längsschnitt durch einen Zentrifugalabscheider
Ein Zentrifugalabscheider weist einen Antriebsmotor 1 (Fig. 1) mit sich vertikal erstreckender Antriebswelle 3 auf, der in einem Gehäuse 2 angeordnet ist. Die Antriebswette 3 tragt eine Nabe bzw. einen Mittelteil 19 zweier Zentrifugenkammern 5,12, die von Mänteln 6,13 aus vollem Material nach außen begrenzt sind und eine Rotationsachse 4 aufweisen. über einen an der Oberseite zentral vorgeschenen Einlaß 21 gelangt zu zentrifugierendes Flüssigkeits-Feststoffgemisch in die erste Zentrifugenkammer 5, in der sich ein wesentlicher Teil der Feststoffe abschneidet. Die Flüssigkeit verläßt mit den enthaltenen restlichen Festoffen die erste Zentrifugenkammer 5 durch Durchtrittsöffnungen 8 und gelangt in die zweite Zentrifugenkammer 12, in der sich die restlichen Feststoffe abscheiden, wobei die gereinigte Flüssigkeit das Gehäuse 2 dann über den Flüssigkeitsauslaß 23 verläßt. Bei Stillstand der Zentrifuge fließen die Feststoffe zusammen mit einem Flüssigkeitsrest aus beiden Zentrifugenkammern 12 durch untere den Feststoffauslaß 15 bildende Durchtrittsöffnungen zu einem Sammelkanal oder Auffangraum 22.

Die im Detail in Fig. 1 gezeigte Ausführung weist zwei ineinander angeordnete Zentrifugenmäntel 6,13 auf, die jeweils konvexe, aus drei geraden Abschnitten bestehende Erzeugende besitzen. Die im Durchflußweg erste, innere Zentrifugenkammer 5 wird demzufolge von ihrem Mantel 6 gegen die äußere Zentrifugenkammer 12 abgetrennt. Die Erzeugende des inneren Mantels 6 erstreckt sich in ihrem oberen Endabschnitt 9 radial und zur Bildung der Gemischeinlaßöffnung 21 mit Abstand von der Rotationsachse 4, liegt also in einer Radialebene. Ein mittlerer, gerader Abschnitt 10 schließt in einem Winkel von 150^{o} an und divergiert somit von der Rotationsachse 4 schräg nach unten. Der anschließende untere Endabschnitt 11 der Erzeugenden steht im rechten Winkel zum mittleren Abschnitt 10 und konvergiert zur Rotationsachse 4, wobei das untere Ende weiter beabstandet ist als das Ende des oberen Endabschnittes 9. Das untere Ende bildet somit die übertrittskante 29 des inneren Mantels 6 für die Flüssigkeit während der Rotation der Zentrifugenkammer 5 als auch für die Feststoffe bei deren Stillstand, wobei sie auf Grund der Verbindung zum Mittelteil 19 in Durchtrittsöffnungen 8 unterteilt ist. Der Mittelteil 19 wird vom Mantel 6 geringfügig überragt und weist an der oberen Stirnseite eine abgeschrägte Stirnfläche 20 auf, die das Gemisch an den mittleren Abschnitt 10 umlenkt und dieses bereits beschleunigt. Die durch die Abschnitte 10 und 11 gebildete Tasche der Zentrifugenkammer 5 weist eine maximale radiale Erstreckung auf, wodurch besonders hohe Fliehkräfte erreicht werden, denen jedoch die an der übertrittskante 29 unten ausströmende Flüssigkeit wesentlich geringer ausgesetzt ist. Die Flüssigkeit wird dort also einen geringen Feststoffanteil von 5 bis 15 % mitführen. Die Durchrittsöffnungen 8 werden durch Verbindungsstege 7 begrenzt, die parallel zur Rotationsachse 4 vom Unterteil des Mantels 6 zu einem Fortsatz 25 des Mittelteiles 19 verlaufen, dessen Durchmesser vergrößert ist und dem unteren Ende des Mantels 6 an der übertrittskante 29 entspricht. Die Verbindungsstege 7 erstrecken sich damit in einer Zylindermantelfläche und nicht radial. Die durch die Durchtrittsöffnungen 8 austretende Flüssigkeit wird durch deren Düsenwirkung beschleunigt und trifft auf den Mantel 13 der äußeren Zentrifugenkammer 12, die einen ähnlichen Aufbau aufweist. Auch dessen Erzeugende setzt sich aus drei Abschnitten zusammen. Die aus der inneren Zentrifugenkammer 5 kommende Flüssigkeit trifft auf einen geraden, mittleren Abschnitt 17, der in bezug auf die der Rotationsachse 4 in einem kleinen Winkel von 10^{o} nach oben divergiert. Der mittlere Abschnitt 17 nimmt dabei eine Höhe ein, die größer als die gesamte innere Zentrifugenkammer 5 ist, da er diese und den Fortsatz 25 des Mittelteiles 19 nach unten überragt. Ein oberer Endabschnitt 16 der Erzeugenden erstreckt sich vom Abschnitt 17 in einem Winkel von 80^{o} nach innen und liegt somit in einer Radialebene, vorzugsweise fluchtet er mit dem oberen Endabschnitt 9 des inneren Mantels 6. Da er mit großem radialem Abstand zur Rotationsachse 4 endet, wird eine übertrittskante 30 für die gereinigte Flüssigkeit gebildet, wobei die aus der inneren Zentrifugenkammer 5 mitgeführten Feststoffe, die hauptsächlich Feinanteile darstellen, auf Grund der höheren Zentrifugalkraft sich am mittleren Abschnitt 17 praktisch vollständig absetzen.

Zur Einsparung von Höhe schließt sich an den mittleren Abschnitt 17 nach unten ein weiterer gerader Abschnitt 18 der Erzeugenden in einem Winkel von 145^{o} nach innen an, der sich somit unter 45^{o} der Rotationsachse 4 nähert. Dessen Ende liegt unterhalb des Fortsatzes 25 des Mittelteiles 19, wobei der Abstand zur Rotationsachse 4 dem Durchmesser des Fortsatzes 25 entspricht. Hier ist der Feststoffauslaß 15 bei Stillstand der Zentrifuge, wobei die Feststoffe und enthaltene Restflüssigkeit unter Einwirkung der Schwerkraft in den Auffangraum 22 absinken. Die Verbindung des äußeren Mantels 13 mit dem Mittelteil 19 erfolgt über Verbindungsstege 14, die sich unterhalb der Verbindungsstege 7 und umfangsversetzt ebenfalls in einer Zylindermantelfläche nach oben zum Fortsatz 25 erstrecken, sodaß der Feststoffauslaß 15 durch einen Kranz von Durchtrittsöffnungen gebildet wird, die aus der äußeren Zentrifugenkammer 12 zur Rotationsachse 4 hin münden. Damit dieses möglich ist, ist der untere Teil des Fortsatzes 25 als Hülse ausgebildet, die einen Ringraum 26 umschließt, der den obersten Teil des Auffangraumes 22 bildet. Auf Grund der gewählten Winkel zwischen den Abschnitten 10, 11 und 17,18 der beiden Erzeugenden fließen die Feststoffe vollständig ab, sodaß eine Nachreinigung nicht erforderlich ist. Der Ringraum 26 wird dabei innen durch den dort untergebrachten Motor 1 begrenzt. Bei laufender Zentrifuge ist der Austritt von Flüssigkeit durch den Feststoffauslaß 15 nicht möglich, da dieser einen wesentlich geringeren Abstand zur Rotationsachse 4 aufweist als die obere Übertrittskante 30. Die Flüssigkeit tritt daher in einem oberhalb der Übertrittskante 30 ausgebildeten Ringkanal 24 des Gehäuses 2 ein, das einen peripheren Auslauf 23 aufweist.

Der Mittelteil 19 weist zur Befestigung an der Antriebswelle 3 eine Bohrung auf, in die eine teilgespaltene Klemmhülse 28 eingesetzt ist, die oben ein Gewinde aufweist. Durch das Verdrehen der sich in einer stirnseitigen Vertiefung des Mittelteiles 19 abstützenden Mutter 27 wird die Klemmhülse an unteren Schrägflächen nach innen gedrückt und auf der Antriebswelle 3 festgeklemmt.

## Patentansprüche

1. Zentrifugalabscheider zur Trennung eines FeststoffFlüssigkeitsgemisches aus dentalem Abwasser, mit einer Vollmantelzentrifuge, die einen angetriebenen Mittelteil (19), einen oberen Gemischeinlaß (21), einen oberen Flüssigkeitsauslaß (23), einen unteren Feststoffauslaß (15) und eine Zentrifugenkammer (12) aufweist, die mit einem eine Abscheidefläche umfassenden Mantel (13) versehen ist, wobei der Mantel (13) am Mittelteil (19) an Durchtrittsöffnungen zum Feststoffauslaß (15) freilassenden Verbindungsstegen (14) gehalten ist, sich von den Verbindungsstegen (14) konisch nach oben erweitert, und an einem oberen nach innen gerichteten Sperrflansch (16) in einer Flüssigkeitsübertrittskante (30) endet, dadurch gekennzeichnet, daß zwei Zentrifugenkammern (5,12) ineinander angeordnet sind, wobei der inneren Zentrifugenkammer (5) der Gemischeinlaß (21) und der äußeren die beiden Auslässe (15,23) zugeordnet sind, und daß die innere Zentrifugenkammer (5) mit einem eine erste Abscheidefläche umfassenden Mantel (6) versehen ist, der am angetriebenen Mittelteil (19) an Durchtrittsöffnungen (8) in die äußere Zentrifugenkammer (12) freilassenden Verbindungsstegen (7) gehalten ist, sich von den Verbindungsstegen (7) ebenfalls konisch nach oben erweitert, und in einem nach innen gerichteten oberen Sperrflansch (9) endet, wobei durch die Durchtrittsöffnungen (8) während der Rotation die Flüssigkeit und ein Restanteil von Feststoffen in die äußere Zentrifugenkammer (12) übertreten und nach Stillstand die an beiden Abscheideflächen gesammelten Feststoffe gemeinsam mit einem Restanteil von Flüssigkeit unter Schwerkrafteinfluß zum Feststoffauslaß (15) abfließen.

2. Zentrifugalabscheider nach Anspruch 1, dadurch gekennzeichnet, daß die Durchtrittsöffnungen (8) zwischen den Verbindungsstegen (7) der inneren Zentrifugenkammer (5) schräg nach unten außen verlaufen.

3. Zentrifugalabscheider nach Anspruch 1 oder 2, wobei der Mittelteil (19) mit einer nach unten ragenden Hülse (25) verbunden ist, und Wandteile der Hülse (25) die Verbindungsstege (14) des äußeren Mantels (13) bilden, dadurch gekennzeichnet, daß die Hülse (25) einen vergrößerten Durchmesser aufweist, und daß die Verbindungsstege (7) des inneren Mantels (6) sich nach unten zum Verbindungsbereich der Hülse (25) mit dem Mittelteil (19) erstrecken.

4. Zentrifugalabscheider nach einem der Ansprüche 1 bis 3, dadurch gekennzeichnet, daß die Verbindungsstege (7,14) der inneren Zentrifugenkammer (5) zu denen der äußeren Zentrifugenkammer (12) in Umfangsrichtung versetzt sind.

5. Zentrifugalabscheider nach einem der Ansprüche 1 bis 4, dadurch gekennzeichnet, daß die Erzeugenden der beiden Mäntel (6,13) aus im Winkel aneinanderstoßenden, geraden Abschnitten (9,10,11; 16,17,18) bestehen und die oberen Endabschnitte (9, 16) beider Erzeugenden sich annähernd in derselben Radialebene senkrecht zur Rotationsachse (4) erstrecken.

## Claims

1. A centrifugal separator for the separation of a solids-liquid mixture of dental waste water, comprising a solid-casing centrifuge which has a driven central portion (19), an upper mature inlet (21), an upper liquid outlet (23), a lower solids outlet (15) and a centrifuge chamber (12) which is provided with a casing (13) enclosing a separation surface, wherein the casing (13) is held to the central portion (19) at connecting limbs (14) leaving passage openings free to the solids outlet (15), enlarges conically upwardly from the connecting limbs (14) and terminates at an upper inwardly directed blocking flange (16) in a liquid overflow edge (30), characterised in that two centrifuge chambers (5, 12) are arranged one in the other, wherein the mixture inlet (21) is associated with the inner centrifuge chamber (5) and the two outlets (15, 23) are associated with the outer centrifuge chamber, and that the inner centrifuge chamber (5) is provided with a casing (6) which encloses a first separation surface and which is held to the driven central portion (19) at connecting limbs (7) leaving free passage openings (8) into the outer centrifuge chamber (12) and also enlarges conically upwardly from the connecting limbs (7) and which terminates in an inwardly directed upper blocking flange (9), wherein during the rotary movement the liquid and a residual part of solids pass through the passage openings (8) into the outer centrifuge chamber (12) and after the separator is stopped the solids which are collected at both separation surfaces together with a residual part of liquid drain under the influence of the force of gravity to the solids outlet (15).

2. A centrifugal separator according to claim 1 characterised in that the passage openings (8) between the connecting limbs (7) of the inner centrifuge chamber (5) extend inclinedly downwardly and outwardly.

3. A centrifugal separator according to claim 1 or claim 2 wherein the central portion (19) is connected to a downwardly projecting sleeve portion (25) and wall parts of the sleeve portion (25) form the connecting limbs (14) of the outer casing (13), characterised in that the sleeve portion (25) is of an increased diameter and that the connecting limbs (7) of the inner casing (6) extend downwardly to the connecting region of the sleeve portion (25) to the central portion (19).

4. A centrifugal separator according to one of claims 1 to 3 characterised in that the connecting limbs (7, 14) of the inner centrifuge chamber (5) are displaced in the peripheral direction relative to those of the outer centrifuge chamber (12).

5. A centrifugal separator according to one of claims 1 to 4 characterised in that the generatrices of the two casings (6, 13) comprise straight portions (9, 10, 11; 16, 17, 18) which meet at an angle and the upper end portions (9, 16) of the two generatrices extend approximately in the same radial plane perpendicularly to the axis of rotation (4).

## Revendications

1. Séparateur centrifuge pour la séparation d'un mélange solides-liquide provenant d'eaux de rejet dentaires, comportant une centrifugeuse à bol plein présentant une partie centrale entraînée (19), une entrée de mélange supérieure (21), une sortie de liquide supérieure (23), une sortie de solides inférieure (15) et une chambre de centrifugation (12) pourvue d'une enveloppe (13) comprenant une surface de séparation, étant précisé que l'enveloppe (13) est supportée par la partie centrale (19), au niveau de nervures de liaison (14) laissant subsister des ouvertures de passage en direction de la sortie de solides (15), s'élargit de façon conique vers le haut à partir des nervures de liaison (14), et se termine par une arête de débordement de liquide (30) au niveau d'un rebord de barrage supérieur (16) orienté vers l'intérieur, caractérisé en ce que deux chambres de centrifugation (5, 12) sont disposées l'une dans l'autre, l'entrée de mélange (21) étant associée à la chambre de centrifugation intérieure (5) et les deux sorties (15, 23) étant associées à la chambre de centrifugation extérieure, et en ce que la chambre de centrifugation intérieure (5) est pourvue d'une enveloppe (6) comprenant une première surface de séparation, est supportée par la partie centrale entraînée (19), au niveau de nervures de liaison (7) laissant subsister des ouvertures de passage (8) en direction de la chambre de centrifugation extérieure (12), s'élargit également de façon conique vers le haut à partir des nervures de liaison (7), et se termine par un rebord de barrage supérieur (9) orienté vers l'intérieur, le liquide et une partie restante de solides passant à travers les ouvertures de passage (8) pendant la rotation et, après arrêt, les solides accumulés sur les deux surfaces de séparation s'écoulant vers la sortie de solides (15) conjointement avec une partie restante de liquide, sous l'influence de la pesanteur.

2. Séparateur centrifuge selon la revendication 1, caractérisé en ce que les ouvertures de passage (8) s'étendent vers l'extérieur, obliquement vers le bas, entre les nervures de liaison (7) de la chambre de centrifugation (5).

3. Séparateur centrifuge selon la revendication 1 ou 2, dans lequel la partie centrale (19) est reliée à une douille (25) faisant saillie vers le bas, et les parties de paroi de la douille (25) forme les nervures de liaison (14) de l'enveloppe extérieure (13), caractérisé en ce que la douille (25) présente un diamètre agrandi, et en ce que les nervures de liaison (7) de l'enveloppe intérieure (6) s'étendent vers le bas, vers la zone de liaison de la douille (25) avec la partie centrale (19).

4. Séparateur centrifuge selon l'une des revendications 1 à 3, caractérisé en ce que les nervures de liaison (7, 14) de la chambre de centrifugation intérieure (5) sont décalées dans la direction périphérique, par rapport à celles de la chambre de centrifugation extérieure (12).

5. Séparateur centrifuge selon l'une des revendications 1 à 4, caractérisé en ce que les génératrices des deux enveloppes (6, 13) sont composées de segments rectilignes (9, 10, 11; 16, 17, 18) se rejoignant en formant un angle, et les segments d'extrémité supérieurs (9, 16) des deux génératrices s'étendant à peu près dans le même plan radial, perpendiculairement à l'axe de rotation (4).
